# EUROPEAN PATENT APPLICATION

(11) **EP 0 804 873 A1**
(43) Date of publication of application: **05.11.1997**
(21) Application number: 96938462.7
(22) Date of filing: 13.11.1996
(51) Int. Cl.: A01G 31/00, A01G 27/00

(54) **METHOD FOR GROWING PLANT AND DEVICE THEREFOR**

(30) Priority: 15.11.1995 JP 322128/95
(71) Applicant: MINORU SANGYO KABUSHIKI KAISHA, Akaiwa-gun Okayama 709-08 (JP)
(72) Inventor: IKUMOTO, Junichi, Akaiwa-gun, Okayama 709-08 (JP); MOTOOKA, Shigeharu, Okayama-shi, Okayama 703 (JP); SUGIMOTO, Shigeo, Okayama-shi, Okayama 709-08 (JP)
(74) Representative: Bubb, Antony John Allen
(86) International application number: JP9603336
(87) International publication number: WO9717835

(57) **Abstract**

A method for growing a plant includes the steps of placing a soil-stick plant grown by soil culture above a surface of water, supplying water to the plant for growing, and allowing newly grown roots to extend toward and reach the water surface to shift to water culture. A device useful for the above method is disclosed.

## Description

### FIELD OF THE INVENTION

The present invention relates to a method for growing a plant by which a plant grown by soil culture is moved to water culture and a device for suitable for the method.

### BACKGROUND OF THE INVENTION

In water culture, nourishment, such as a liquid fertilizer, has been dissolved in water so that plants take it to grow. The water culture is so easy to manage that everyone can produce almost the same results. On the other hand, soil culture is difficult to time for supplying water and fertilizer to give plants proper nourishment, demanding more planning than water culture. In addition, the quality of soil has large effects on plant growth. Consequently, the results vary widely with growers.

In conventional water culture, it has been a practice to use young plants which are grown specifically for water culture. When young plants grown by soil culture, such as young plants grown in polypots, are used for water culture, one of the following treatments has been practiced.
(1) The soil-stick roots of young plants are washed with water to remove the soil, and the plants are subjected to training culture for acclimatization to water culture. However, this method causes damage to roots and/or slows the growing of the plant.
(2) Cuttings are used to make young plants suitable for water culture. However, this method requires large amounts of labor and slows the growth.

As has been described above, the young plants grown by soil culture cannot be used for water culture as they are and require large amounts of labor and time to make them suitable for water culture. In addition, there is a risk of the growth stop or death of young plants.

The reasons that the young plants grown by soil culture, such as those grown in polypots, cannot be used for water culture are as follows.
(1) The roots of young plants grown in polypots are used to such atmosphere as having sufficient air or oxygen so that when they are moved to a culture fluid, they suffer from oxygen starvation and stop growing or die.
(2) The soil contains many microbes and various germs. If they are carried over to the culture fluid, the germs adapted to the reduction state (or lack of oxygen) increase so that the plants stop growing or die.

### SUMMARY OF THE INVENTION

The present invention aims to solve the above problems involved with transition from soil culture to water culture, and it is an object of the invention to provide a growing method and a device for the method by which it is possible to use young plants grown by soil culture, such as those grown in polypots, for water culture without growth stop or death.

According to the invention there is provided a method for growing a plant which includes the steps of placing a soil-stick plant grown by soil culture above a surface of water; supplying water to the soil-stick plant for growing; and allowing newly grown roots to extend toward and reach the surface of water to thereby shift to water culture. According to embodiments, the placing step is a step of placing soil-stick roots of the plant in a holder provided above the surface of water. The water supplying step is a step of blowing air into the water to make bubbles for supply water to soil-stick roots with water droplets produced upon burst of the bubbles.

According to another aspect of the invention there is provided a device for growing a plant, which includes a container for containing water or a solution and having an opening in a top of the container; and a holder provided in the opening to support soil-stick roots of a plant and having holes through which roots of the plant pass.

According to still another aspect of the invention there is provided a device for growing a plant, which includes a container for containing water or a solution and having an opening in a top of the container; a holder provided in the opening to support soil-stick roots of a plant and having holes through which roots of the plant pass; and a sparger for aerating the water or solution. The holder is provided such that the bottom is positioned a predetermined distance above the surface of a liquid. Examples of the holder include a wire meshed basket, a porous basket, and a netted bag. According to embodiments of the invention, the sparger includes an air pump and an air nozzle provided in the water or solution and linked to the air pump for making bubbles in the water or solution, the holder is suspended from the opening, and the container is shielded from light.

### BRIEF DESCRIPTION OF THE DRAWINGS

Fig. 1 is a sectional view of a growing device according to an embodiment of the invention;
Fig. 2 is a diagram showing a pot and a young plant with soil;
Figs. 3(a)-(c) are diagrams showing how to use the growing device.

### DESCRIPTION OF THE PREFERRED EMBODIMENT

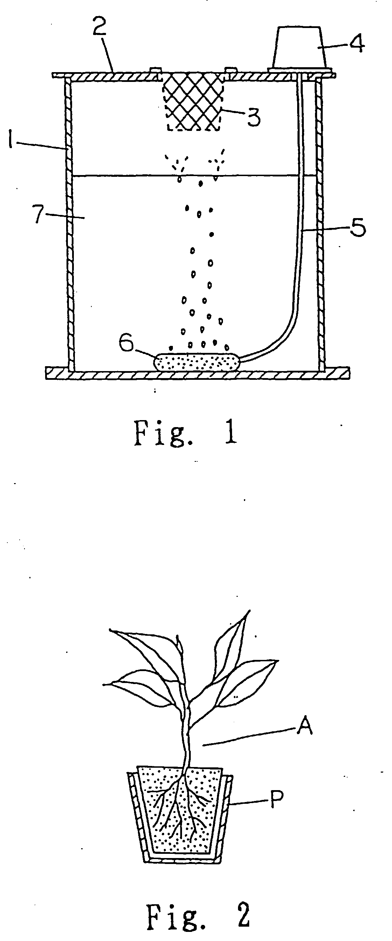

A preferred embodiment of the invention will be described with reference to Figs. 1-3.

In Fig. 1, a growing device includes a container 1 having a bottom wall and a side wall, a removable cover 2 having an opening 2a, a basket 3 suspended from the opening 2a, and a sparger consisting of an air pump 4 mounted on the cover 2, a communication pipe 5, and an air nozzle 6.

The container 1 and the cover 2 are made from an opaque material to keep dark the inside of the container 1 and contains water or a nutrient solution to a predetermined level. The basket 3 has holes sufficiently small to keep the soil-stick roots of young plants but sufficiently large to allow newly grown roots to go out. The air nozzle 6 discharges as bubbles in the solution the air compressed by the air pump 4. An example useful as the air nozzle 6 is the so-called "air stone" which has a large number of linked pores therein.

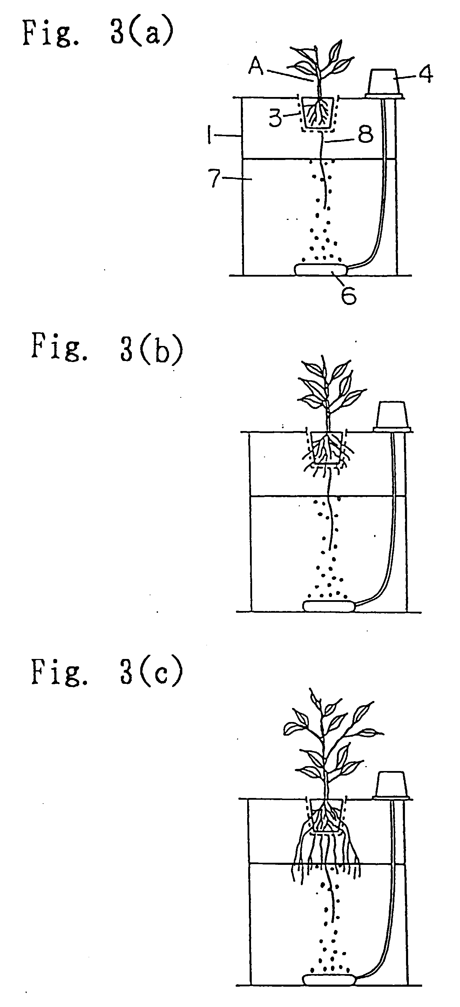

How to use the device to grow a soil-stick young plant will be described with reference to Fig. 3.
(a) First of all, water or a nutrient solution 7 (hereinafter "liquid 7") is put in the container 1 to a level slightly below the basket 3. The distance L between the liquid level and the bottom of the basket is set such that tiny droplets of water made by blasts of bubbles from the air nozzle 6 adhere to the bottom and/or side wall of the basket 3. Then, the soil-stick young plant A (Fig. 2) grown by soil culture in a polypot P or the like is pulled out of the pot P, and the soil-stick roots are put in the basket 3. It is preferred that a water supply ribbon 8 made from non-textile fabrics is suspended from the basket 3 into the liquid 7 to pick up the liquid for supplying water to the roots. Then, the air pump 4 is operated.
(b) Consequently, the inside of the container 1 is kept dark and humid with no wind, and the soil-stick roots of the young plant A are supplied with water by the water supply ribbon 8 and water droplets (bottom water supply) and kept wet so that new roots extend through the basket holes toward the liquid 7. Since it is believed that the nourishment necessary for the roots to reach the liquid is contained in the soil-stick roots themselves, the liquid 7 may be mere water. If the liquid is a nutrient solution, it is possible not only to supply nourishment to the soil-stick and new roots but also make the new roots acclimatized with the solution.
(c) When the new roots reach the liquid 7, they take in nourishment from the liquid 7, and water culture takes place, when the water supply ribbon 8 may be removed. The sparger increases the oxygen content in the liquid 7 to help growing the plant.

Alternatively, either only one of the water supply ribbon 8 and the sparger may be used to supply water until the new roots reach the liquid or the water supply ribbon 8 is used to supply water to the soil-stick roots, and the sparger is used to supply water to the new roots. They may be replaced by a funnel to supply water from outside. If the sparger is not used, it is preferred that a spray or the like is used to keep the inside of a container humid to prevent the new roots from drying and dying.

Even after the new roots reach the liquid and the water culture takes place, it is preferred to use a sparger because it helps growing the plant as described above and because there are some plants that suffer from oxygen starvation. Another type of sparger, such as a recirculation type described in Japanese patent application Kokoku No. 78249/92, may be used.

The container may be kept dark by means of opaque painting or cover. If light enters the container, some algae grow in the liquid to hinder the growth of a plant. By cutting off light, it is possible to prevent algae from growing.

By sterilizing the soil-stick roots taken out of the pot P with a germicidal agent before they are put in the basket 3, it is possible to prevent the various germs from growing in the liquid 7 when the soil falls in the liquid 7. Also, it is possible to place the whole pot P in the basket 3 without taking the roots out of the pot P. In this case, it is possible to prevent the soil from falling into the liquid 7, and the new roots grow through the holes of the pot P and the basket 3.

### INDUSTRIAL UTILITY

According to the invention it is possible to move soil-stick young plants grown by soil culture in polypots or the like to water culture without growth stop or death. Since the management of water culture is so easy that anyone is able to get similar results, everyone can enjoy growing pot grown plants by water culture without trouble.

## Claims

1. A method for growing a plant comprising the steps of:
placing a soil-stick plant grown by soil culture above a surface of water;
supplying water to said soil-stick plant for growing; and
allowing newly grown roots to extend toward and reach said surface of water to thereby shift to water culture.

2. A method according to claim 1, wherein said placing step comprises a step of placing soil-stick roots of said plant in a holder provided above said surface of water.

3. A method according to claim 1 or 2, wherein said water supplying step comprises a step of blowing air into the water to make bubbles for supply water with water droplets produced by blasts of said bubbles.

4. A device for growing a plant, comprising:
a container for containing water or a solution and having an opening in a top of said container; and
a holder provided in said opening to support soil-stick roots of a plant and having holes through which roots of said plant pass.

5. A device for growing a plant, comprising:
a container for containing water or a solution and having an opening in a top of said container;
a holder provided in said opening to support soil-stick roots of a plant and having holes through which roots of said plant pass; and
a sparger for aerating said water or solution.

6. A device according to claim 5, wherein said sparger comprises an air pump and an air nozzle provided in said water or solution and linked to said air pump for making bubbles in said water or solution.

7. A device according to one of claims 4-6, wherein said holder is suspended from the said opening.

8. A device according to one of claims 4-7, wherein said container is shielded from light.
